# EUROPEAN PATENT APPLICATION

(11) **EP 2 781 396 A1**
(43) Date of publication of application: **24.09.2014**
(21) Application number: 13305349.6
(22) Date of filing: 21.03.2013
(51) Int. Cl.: B60L 11/18, H01R 13/00

(54) **Cable connector assembly process, cable connector and set of cable connectors obtained by this process**

(71) Applicant: Delphi International Operations Luxembourg S.à r.l., 4940 Bascharage (LU)
(72) Inventor: Guillanton, Erwan, 28130 Maintenon (FR); Perot, Aymeric, 28230 Epernon (FR)
(74) Representative: Robert, Vincent

(57) **Abstract**

A set of cable connectors wherein each connector has the same housing (310). A cable is mounted in each connector. Each housing comprises two housing halves (320, 322). Each housing half has a clamping lip (330, 331 or 332) so as to clamp a cable portion (510) when the housing halves (320, 322) are assembled together. The clamping lips (330, 331 or 332) define a cable opening which has the same section or dimension for all the cable connectors of the set of connectors. But the cable section is not the same for all the cable connectors of the set of connectors. In order to adapt to small cable sections, a thermo-retractable sheath portion (550) is slip on the cable portions (510) of small section which is then sandwiched between the clamping lips (330, 331 or 332) and the cable external sheath when the first and second housing halves (320, 322) are assembled together.

## Description

### Field of the invention

The invention relates to the field of cable connectors. For instance, the invention relates to high voltage plug connectors for vehicles, such as plug connectors for supplying power to electric vehicles.

### Background of the invention

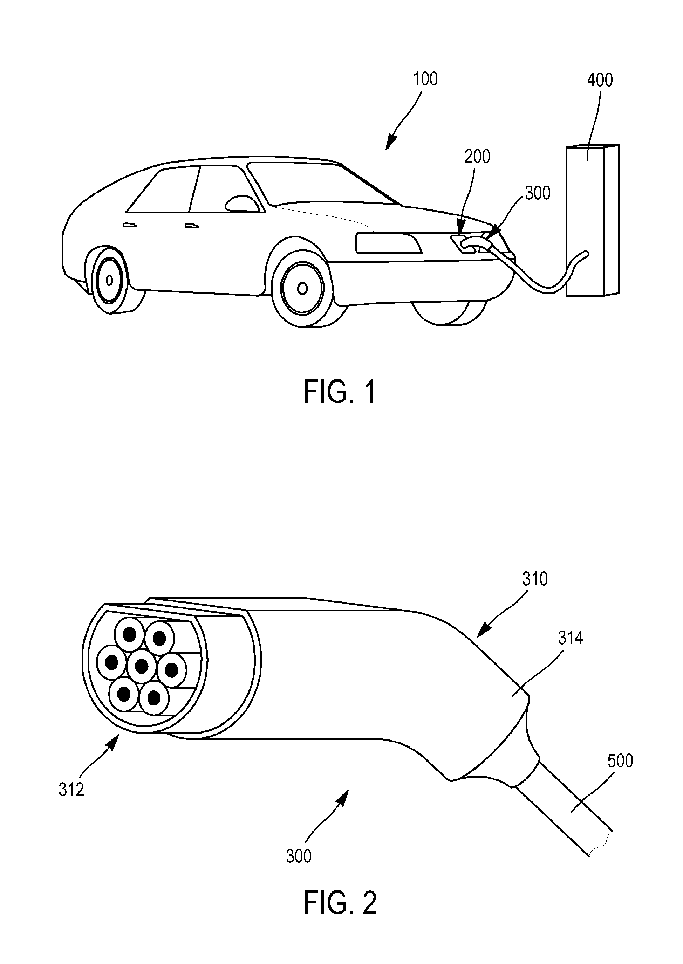

For the sake of example, the background of the invention is taken in the field of plug connectors for charging electric vehicle. As schematically shown on Fig. 1, electric vehicles 100 may comprise a socket connector 200 in which a plug connector 300 is mated for charging a battery set with power supplied by an electric charge station 400.

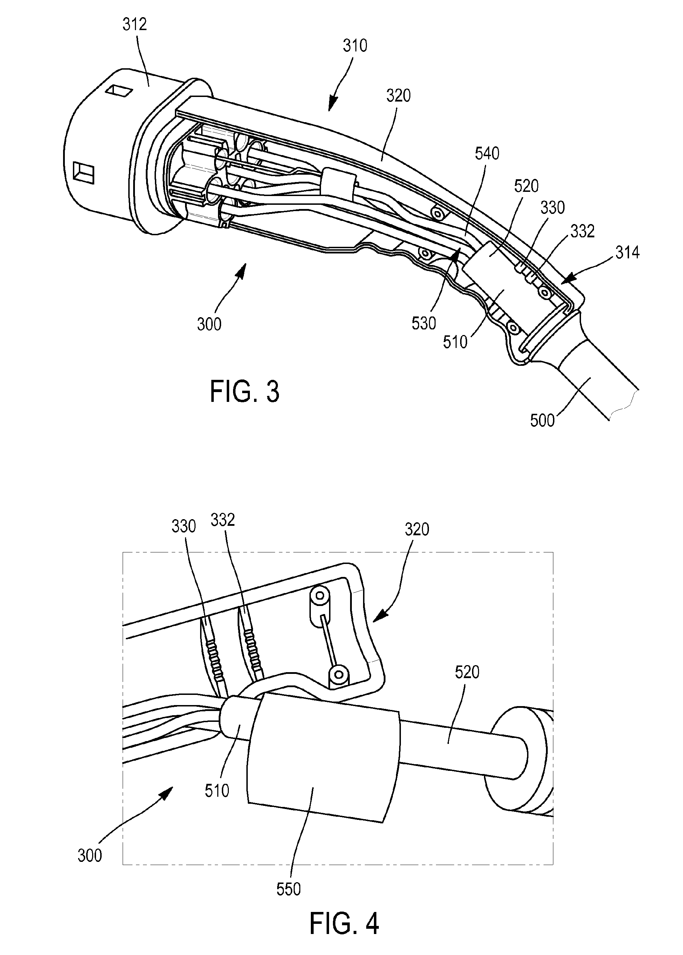

As schematically shown on Fig. 2 and 3, such a plug connector 300 usually has a housing 310 with two housing portions 320, for instance two housing halves (one of these housing halves is removed from the plug connector shown on Fig. 3). Each one of these housing portions 320 comprises at least one clamping lip 330 for clamping a cable end 510 which is mounted in the housing 310. Each clamping lip 330 has a concave curvature extending in a plane perpendicular to the cable axis, with serrations that can be constricted around the external sheath of the cable 500, when the two housing portions are assembled together.

In the state of the art, when cables with various diameters are intended to be used, connector manufacturers have to manufacture housing portions having clamping lips with various curvatures each one of which being adapted to a particular cable diameter.

A same mold can be used for molding housing portions various curvatures, but with various inserts in the housing portion mold for obtaining clamping lip diameters adapted to the various cable diameters.

This makes more numerous the numbers of part references to be manufactured and supplied to customers. This makes the logistics more complicated and this increases the risk of assembling housing portions with clamping lips having a different curvature, since the only difference between two housing portions corresponding to two different references relates only on the shape of their clamping lip.

It is then desirable to mitigate at least one of these drawbacks.

### Summary of the invention

To this aim, according to the invention, a cable connector assembly process is provided in which a thermo-retractable sheath portion is slip on the cable portion to be clamped between the housing portions so as to increase the external diameter in the cable portion sandwiched between at least one clamping lip and the cable external sheath.

In other words, a thermo-retractable sheath portion (also called shrink tube or heat shrinkable tubing) is provided on the cable portion to be clamped between the housing portions so as to compensate a smaller cable diameter.

The process according to the invention has then the advantage of avoiding
- using insert in molds for molding clamping lips with various curvatures,
- having to manage a logistics with many references, and
- making mistakes of references (i. e. part numbers) during assembly operations.

The invention also relates to cable connectors and sets of connectors obtained with this process.

Other features and advantages of the invention will be set forth in, or apparent from, the following description and of the appending drawings.

### Brief description of the drawings

On the drawings:
- Figure 1 schematically represents a vehicle connected to an electric charge station with an example of cable connector assembly;
- Figure 2 schematically represents the cable connector of the connector assembly of Figure 1.
- Figure 3 schematically represents the cable connector of Figure 2 with a portion of the connector housing which is removed;
- Figure 4 schematically represents a detail of a cable connector according to the invention:
- Figures 5a and 5b schematically represent a set of cable connectors according to the invention; and
- Figure 6a and 6b schematically represent the clamping lips of the cable connectors respectively shown on Figures 5a and 5b.

On the different figures, the same references signs designate like or similar elements.

### Detailed description

The invention is illustrated with an example of cable connector taken in the field of high voltage plug connectors for vehicles, such as plug connectors for supplying power to electric vehicles. But, the invention can find applications in other kind of cable connectors.

In the example illustrated on Fig. 2, the cable connector 300 according to the invention comprises a housing 310 to which a cable 500 is mounted. It has a mating portion 312, to be mated in a socket connector 200, and a rear end portion or clamping section 314.

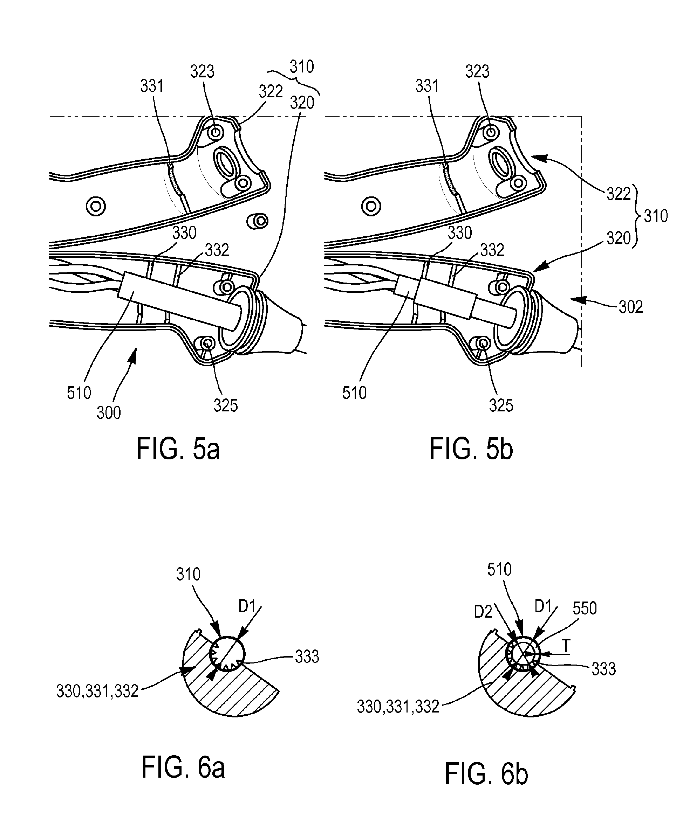

As best shown on Fig. 3, the housing 310 has a first housing portion 320 (it also has a second housing portion not shown on Fig. 3, but substantially symmetrical to the first housing portion 320 - see Fig. 5a and 5b).

At least the first housing portion 320 comprises two clamping lips 330, 332 (as shown on Figs. 5a and 5b, the second housing portion 322 comprises one clamping lip 331). But in other embodiments, it can be the opposite with a first housing portion 320 having only one clamping lip and the second housing portion has two clamping lips. Or both the first and second housing portions can have one, two or more clamping lips. A clamping lip may also be present only on one of the housing portions, as long as the cable 500 can be clamped between a clamping lip a another element. In fact, the number of clamping lips is not relevant with regard to the invention implementation.

As shown on Fig. 3, a cable portion or cable end 510 is mounted inside the housing 310. The cable portion 510 has a cable external sheath 520 (made of insulating material) wrapping a conducting core 530 which may comprise several cable strands 540. When the first and second housing portions 320, 322 are assembled together the cable portion 510 is clamped between the clamping lips 330, 332 of the first housing portion and the clamping lip 331of the second housing portion 322 (see Fig. 5a and 5b).

As shown on Fig. 4, the cable connector 300 according to the invention further comprises a thermo-retractable sheath portion 550 (also called heat shrinkable tubing) around the cable portion 510. Then the thermo-retractable sheath portion 550 is also clamped when the first and second housing portions 320, 322 are assembled together. In other words, the thermo-retractable sheath portion 550 is sandwiched between the clamping lips 330, 332, 331 and the cable external sheath 520 when the first and second housing portions 320, 322 are assembled together.

Advantageously, the thermo-retractable sheath portion 550 has an internal surface with covered with a layer of glue or adhesive material. For example, the thermo-retractable sheath portion 550 can be a Heat Shrinkable Tubing 3:1 HIS-A - With adhesive liner - sold by HellermannTyton ®. There are several other references sold by this supplier which allow adapting to various cable diameters. The adhesive or glue layer improves the cable retention I the housing 310. It improves the sealing too.

In fact, according to the invention, it is not always necessary to use a thermo-retractable sheath portion 550. Indeed, the invention relates in particular to a process which allows adapting several cable diameters. But, if the clamping lips are designed so as to be adapted to the larger cable diameter, a thermo-retractable sheath portion 550 is not necessary for such a cable. A thermo-retractable sheath portion 550 is necessary for smaller diameter cables.

Consequently, advantageously the cable connector assembly process comprises a step of providing at least two connectors 300, 302 (see Fig. 5a and 5b). Each one of these two connectors 300, 302 have the same housing 310 with a first housing portion 320 and a second housing portion 322, with respectively two and one clamping lip(s) as already explained. The first housing portion 320 and a second housing portion 322 also have screwing means 323, 325 for assembling these housing portions together. The first housing portion 320 and a second housing portion 322 are substantially, symmetrical and differs only by the number of clamping lips.

At another step of the cable connector assembly process according to the invention, a cable portion 510 is mounted inside each one of the connector housings 310. In the cable connector of Fig. 5a, the cable portion 510 has a larger diameter than in the cable connector of Fig. 5b. For example, the diameter of the cable portion 510 in the cable connector of Fig. 5a is 13.9 mm and the diameter of the cable portion 510 in the cable connector of Fig. 5b is 12 mm.

As show on Figs. 6a and 6b, the clamping lips 330, 331 or 332 are the same for each housing portions. They comprise serrations 333 along the curvature which is intended to be constricted at least partially around the external sheath of the cable portion 510. The clamping lips 330, 331 or 332 extend substantially perpendicularly to the cable longitudinal axis.

The external diameter of the cable portion in Fig. 6a is D1 (for example equal to 12.9mm) and the external diameter of the cable portion in Fig. 6b is D2 < D1 (for example equal to 9.9mm).

For the second connector 302 only, a thermo-retractable sheath portion 550 is slip on the cable portion 510 so as to compensate for its smaller diameter.

Once the thermo-retractable sheath portion 550 is slip on the cable portion 510, but prior clamping it between the first and second housing portions 320, 322 a step of heating the thermo-retractable sheath portion 550 is operated for the second connector 302. For example, the thermo-retractable sheath portion 550 is heated at 115°C.

After this heating step, the first and second housing portions 320, 322 of the second connector 302 can be assembled so as to sandwich the thermo-retractable sheath portion 550 between the clamping lips and the cable external sheath. Once heated, the thickness T of the thermo-retractable sheath portion is so that D2+T=D1.

Of course, for the first connector, since the cable portion 510 already has the appropriate diameter, there is no need for a thermo-retractable sheath portion 550. Consequently, for the first connector 300, the first and second housing portions 320, 322 are assembled together directly without using a thermo-retractable sheath portion. At the same time the cable portion 510 is clamped between the clamping lips of the first and second housing portions 320, 322. The clamping lips 330, 332 are directly in contact around the cable external sheath 520.

Advantageously, series of first 300 and second 302 connectors can be produced independently, even at different manufacturing locations. All their parts (except the cable 500 and the thermo-retractable sheath portion 550) are the same. According to the invention, the same mold is used for molding respectively the first housing portion 320 and the second housing portion 322, of first 300 and second 302 connectors, contrarily to the prior art processes in which clamping lips having various curvatures were obtained in mounting various inserts in the housing portion mold.

A same connector manufacturer and/or a same harness maker can assemble both the first and second connectors 300, 302 according to the process explained above, and consequently can manufacture, assemble and/or sell sets of cable connectors comprising first and second connectors 300, 302 (even if they are not sold at the same time and/or in the same package).

Of course, the process according to the invention applies to more than two connectors having or not a thermo-retractable sheath portion 550, but also to two or more connectors having each a thermo-retractable sheath portion 550 with a different thickness for adapting various cable diameters. For example, for obtaining several thicknesses of thermo-retractable sheath portions, the initial diameter (before the heating step) of the thermo-retractable sheath portion 550 can be chosen larger so as to obtain a greater thickness once shrunken.

## Claims

1. Cable connector assembly process comprising the steps of
- providing at least two connectors (300, 302), each one of these two connectors having a housing (310) with a first housing portion (320) and a second housing portion (322), at least the first housing portion (320) comprising a clamping lip (330 or 332),
- mounting a cable portion (510) inside each one of the connector housings (310), the cable portion (510) having a cable external sheath (520) around a conducting core (530),
- assembling the first and second housing portions (320, 322) together and at the same time clamping the cable portion (510) between the clamping lip (330 or 332) and the second housing portion (322),
**characterized in that** for one (302) of the two connectors (300, 302), it comprises the step of slipping a thermo-retractable sheath portion (550) on the cable portion (510) so as to sandwich it between the clamping lip (330 or 332) and the cable external sheath (520) when the first and second housing portions (320, 322) are assembled together, while in the other one (300) of the two connectors the clamping lip (330 or 332) is directly in contact around the cable external sheath (520).

2. Process according to claim 1, comprising the step of heating the thermo-retractable sheath portion (550) on the cable portion (510) once slip on the cable portion (510) but prior clamping it.

3. Process according to claim 1 or 2, wherein both connectors (300, 302) have first and second housing portions comprising a clamping lip (330, 331 or 332).

4. Process according to one of the preceding claims, wherein the thermo-retractable sheath portion (550) has an internal surface with covered with a layer of glue.

5. A cable connector comprising
- a housing (310) with a first housing portion (320) and a second housing portion (322), at least the first housing portion (320) comprising a clamping lip (330 or 332), and
- a cable portion (510) mounted inside the housing (310) and clamped between the clamping lip (330 or 332) and the second housing portion (322) when the first and second housing portions (320, 322) are assembled together, the cable portion (510) having a cable external sheath (520) around a conducting core (530),
**characterized in that** it further comprises a thermo-retractable sheath portion (550) around the cable portion (510) so as to be sandwiched between the clamping lip (330 or 332) and the cable external sheath (520) when the first and second housing portions (320, 322) are assembled together.

6. Process according to claim 5, wherein both the first and second housing portions (320, 322) comprise a clamping lip (330, 331 or 332).

7. Process according to claim 5 or 6, wherein the thermo-retractable sheath portion (550) has an internal surface with covered with a layer of glue.

8. Set of cable connectors comprising at least two connectors (300, 302), each one of these two connectors having
- a housing (310) with a first housing portion (320) and a second housing portion (322), at least the first housing portion (320) comprising a clamping lip (330 or 332), and
- a cable portion (510) mounted inside the housing (310) and clamped between the clamping lip (330 or 332) and the second housing portion (322) when the first and second housing portions (320, 322) are assembled together, the cable portion (510) having a cable external sheath (520) around a conducting core (530),
**characterized in that** one (302) of the two connectors (300, 302) comprises a thermo-retractable sheath portion (550) around the cable portion (510) so as to be sandwiched between the clamping lip (330 or 332) and the cable external sheath (520) when the first and second housing portions (320, 322) are assembled together, while in the other one (300) of the two connectors (300, 302) the clamping lip (330 or 332) is directly in contact around the cable external sheath (520).

9. Set of cable connectors according to claim 8, wherein both connectors have first and second housing portions (320, 322) comprising a clamping lip (330, 331 or 332).

10. Set of cable connectors according to claim 8 or 9, wherein the thermo-retractable sheath portion (550) has an internal surface with covered with a layer of glue.
